(19) Europäisches Patentamt
European Patent Office
Office européen des brevets

(11) EP 2 620 857 A1

(12) EUROPEAN PATENT APPLICATION

(43) Date of publication:
31.07.2013 Bulletin 2013/31

(51) Int Cl.:
G06F 3/048 (2013.01)    G06F 3/041 (2006.01)

(21) Application number: 12152881.4

(22) Date of filing: 27.01.2012

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicant: Research In Motion Limited
Waterloo, ON N2L 3W8 (CA)

(72) Inventors:
• Van Eerd, Peter Anthony
Waterloo, Ontario N2L 3W8 (CA)

• Lang, Todd Edward
Waterloo, Ontario N2L 3W8 (CA)
• Van Geest, Daniel William
Waterloo, Ontario N2L 3W8 (CA)

(74) Representative: Fennell, Gareth Charles et al
Kilburn & Strode LLP
20 Red Lion Street
London WC1R 4PJ (GB)

(54) **Touch-sensitive display and method of controlling a touch-sensitive display**

(57)    A method includes detecting a touch at a first location on a touch-sensitive display, detecting the touch at a second location on the touch-sensitive display, calculating a third location based on the first location and the second location, and displaying information utilizing the third location.

FIG. 2

**Description**

The present disclosure relates to electronic devices including, but not limited to, portable electronic devices having touch-sensitive displays and their control,

**BACKGROUND**

Electronic devices, including portable electronic devices, have gained widespread use and may provide a variety of functions including, for example, telephonic, electronic messaging and other personal information manager (PIM) application functions. Portable electronic devices include several types of devices including mobile stations such as simple cellular telephones, smart telephones (smart phones), Personal Digital Assistants (PDAs), tablet computers, and laptop computers, with wireless network communications or near-field communications connectivity such as Bluetooth® capabilities.

Portable electronic devices such as PDAs, or tablet computers are generally intended for handheld use and ease of portability. Smaller devices are generally desirable for portability. A touch-sensitive display, also known as a touchscreen display, is particularly useful on handheld devices, which are small and may have limited space for user input and output. The information displayed on the display may be modified depending on the functions and operations being performed. Improvements in electronic devices with touch-sensitive displays are desirable.

**SUMMARY**

A method includes detecting a touch at a first location on a touch-sensitive display, detecting the touch at a second location on the touch-sensitive display, calculating a third location based on the first location and the second location, and displaying information utilizing the third location. An electronic device includes a touch-sensitive display and a processor coupled to the touch-sensitive display and configured to detect a touch at a first location on the touch-sensitive display, detect the touch at a second location on the touch-sensitive display, calculate a third location based on the first location and the second location, and display information utilizing the third location on the touch-sensitive display.

**DETAILED DESCRIPTION**

The following describes an electronic device and a method of displaying information on the electronic device. The method includes detecting a touch at a first location on a touch-sensitive display, detecting the touch at a second location on the touch-sensitive display, calculating a third location based on the first location and the second location, and displaying information utilizing the third location.

For simplicity and clarity of illustration, reference numerals may be repeated among the figures to indicate corresponding or analogous elements. Numerous details are set forth to provide an understanding of the embodiments described herein. The embodiments may be practiced without these details, In other instances, well-known methods, procedures, and components have not been described in detail to avoid obscuring the embodiments described. The description is not to be considered as limited to the scope of the embodiments described herein.

The disclosure generally relates to an electronic device, which is a portable electronic device in the embodiments described herein. Examples of portable electronic devices include mobile, or handheld, wireless communication devices such as pagers, cellular phones, cellular smart-phones, wireless organizers, PDAs, wirelessly enabled notebook computers, tablet computers, and so forth. The portable electronic device may also be a portable electronic device without wireless communication capabilities, such as a handheld electronic game device, digital photograph album, digital camera, or other device.

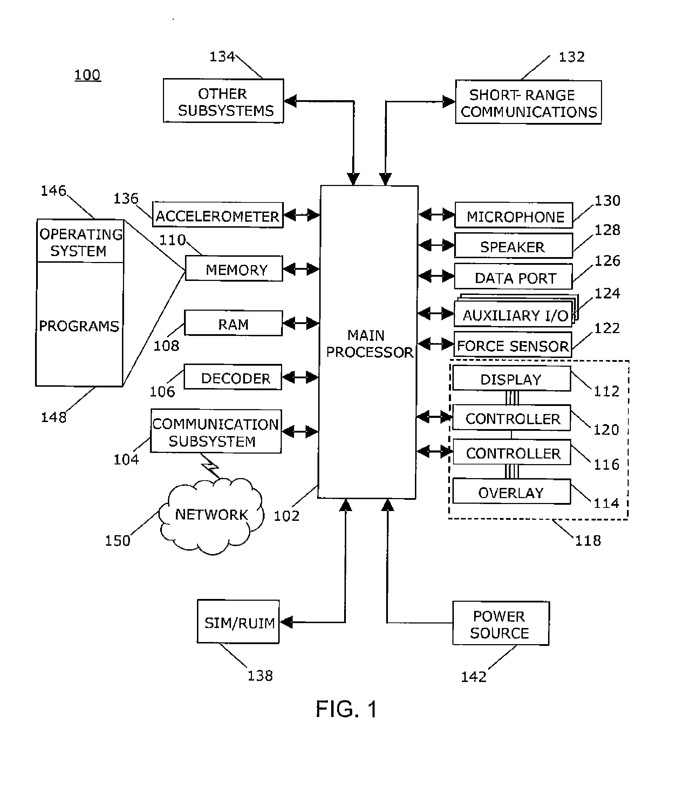

A block diagram of an example of a portable electronic device 100 is shown in FIG. 1. The portable electronic device 100 includes multiple components, such as a processor 102 that controls the overall operation of the portable electronic device 100. The processor 102 may be a single processor, a dual-core processor, or multiple processors, although the processor 102 is referred to in singular form. The portable electronic device 100 presently described optionally includes a communication subsystem 104 and a short-range communications 132 module to perform various communication functions, including data and voice communications. Data received by the portable electronic device 100 is decompressed and decrypted by a decoder 106. The communication subsystem 104 receives messages from and sends messages to a wireless network 150. The wireless network 150 may be any type of wireless network, including, but not limited to, data wireless networks, voice wireless networks, and networks that support both voice and data communications, A power source 142, such as one or more rechargeable batteries or a port to an external power supply, powers the portable electronic device 100.

The processor 102 interacts with other components, such as Random Access Memory (RAM) 108, memory 110, a touch-sensitive display 118, an auxiliary input/output (I/O) subsystem 124, a data port 126, a speaker 128, a microphone 130, short-range communications 132, and other device subsystems 134. Input via a graphical user interface is provided via the touch-sensitive display 118. The touch-sensitive display 118 may include a display 112 operatively coupled to a display controller 120, also referred to as a display driver, and a touch-sensitive overlay 114 operatively coupled to a touch controller 116. The processor 102 interacts with the display 112 via the display controller 120. The processor 102 interacts with the touch-sensitive overlay 114 via the touch controller 116. Information, such as text, characters, symbols, images, icons, and other items that may be displayed or rendered on a portable electronic device, is displayed on the touch-sensitive display 118 via the processor 102. The processor 102 may interact with an accelerometer 136 that may be utilized to detect direction of gravitational forces or gravity-induced reaction forces, for example, to determine the orientation of the electronic device 100.

To identify a subscriber for network access, the electronic device 100 may optionally use a Subscriber Identity Module or a Removable User Identity Module (SIM/RUIM) card 138 for communication with a network, such as the wireless network 150. Alternatively, user identification information may be programmed into memory 110.

The electronic device 100 includes an operating system 146 and software programs or components 148 that are executed by the processor 102 and are typically stored in a persistent, updatable store such as the memory 110. Additional applications or programs may be loaded onto the electronic device 100 through the wireless network 150, the auxiliary I/O subsystem 124, the data port 126, the short-range communications subsystem 132, or any other suitable subsystem 134.

A received signal, such as a text message, an e-mail message, or web page download, is processed by the communication subsystem 104 and input to the processor 102. The processor 102 processes the received signal for output to the display 112 and/or to the auxiliary I/O subsystem 124. A subscriber may generate data items, for example e-mail messages, which may be transmitted over the wireless network 150 through the communication subsystem 104, for example.

The touch-sensitive display 118 may be any suitable touch-sensitive display, such as a capacitive, resistive, infrared, surface acoustic wave (SAW) touch-sensitive display, strain gauge, optical imaging, dispersive signal technology, acoustic pulse recognition, and so forth, as known in the art. A capacitive touch-sensitive display may include a capacitive touch-sensitive overlay 114. The overlay 114 may be an assembly of multiple layers in a stack including, for example, a substrate, a ground shield layer, a barrier layer, one or more capacitive touch sensor layers separated by a substrate or other barrier, and a cover. The capacitive touch sensor layers may comprise any suitable material, such as indium tin oxide (ITO).

One or more touches, also known as touch contacts or touch events, may be detected by the touch-sensitive display 118. The processor 102 may determine attributes of the touch, including a location of a touch. Touch location data may include data for an area of contact or data for a single point of contact, such as a point at or near a center of the area of contact. The location of a detected touch may include x and y components, e.g., horizontal and vertical components, respectively, with respect to one's view of the touch-sensitive display 118. For example, the x location component may be determined by a signal generated from one touch sensor, and the y location component may be determined by a signal generated from another touch sensor. A signal is provided to the controller 116 in response to detection of a touch. A touch may be detected from any suitable input member, such as a finger, thumb, appendage, or other objects, for example, a stylus, pen, or other pointer, depending on the nature of the touch-sensitive display 118. Multiple simultaneous touches may be detected.

One or more gestures on the touch-sensitive display 118 may also be detected. A gesture, such as a swipe, also known as a flick, is a particular type of touch on a touch-sensitive display 118 and may begin at an origin point and continue to an end point. A gesture may be identified by attributes of the gesture, including the origin point, the end point, the distance travelled, the duration, the velocity, and the direction, for example. A gesture may be long or short in distance and/or duration. Two points of the gesture may be utilized to determine a direction of the gesture. A gesture may also include a hover. A hover may be a touch at a location that is generally unchanged over a period of time or is associated with the same selection item for a period of time.

An optional force sensor 122 or force sensors may be disposed in any suitable location, for example, between the touch-sensitive display 118 and a back of the electronic device 100 to detect a force imparted by a touch on the touch-sensitive display 118. The force sensor 122 may be a force-sensitive resistor, strain gauge, piezoelectric or piezoresistive device, pressure sensor, or other suitable device. Force as utilized throughout the specification refers to force measurements, estimates, and/or calculations, such as pressure, deformation, stress, strain, force density, force-area relationships, thrust, torque, and other effects that include force or related quantities.

Force information related to a detected touch may be utilized to select information, such as information associated with a location of a touch. For example, a touch that does not meet a force threshold may highlight a selection option, whereas a touch that meets a force threshold may select or input that selection option. Selection options include, for example, displayed or virtual keys of a keyboard; selection boxes or windows, e.g., "cancel," "delete," or "unlock"; function buttons, such as play or stop on a music player; and so forth. Different magnitudes of force may be associated with different functions or input. For example, a lesser force may result in panning, and a higher force may result in zooming.

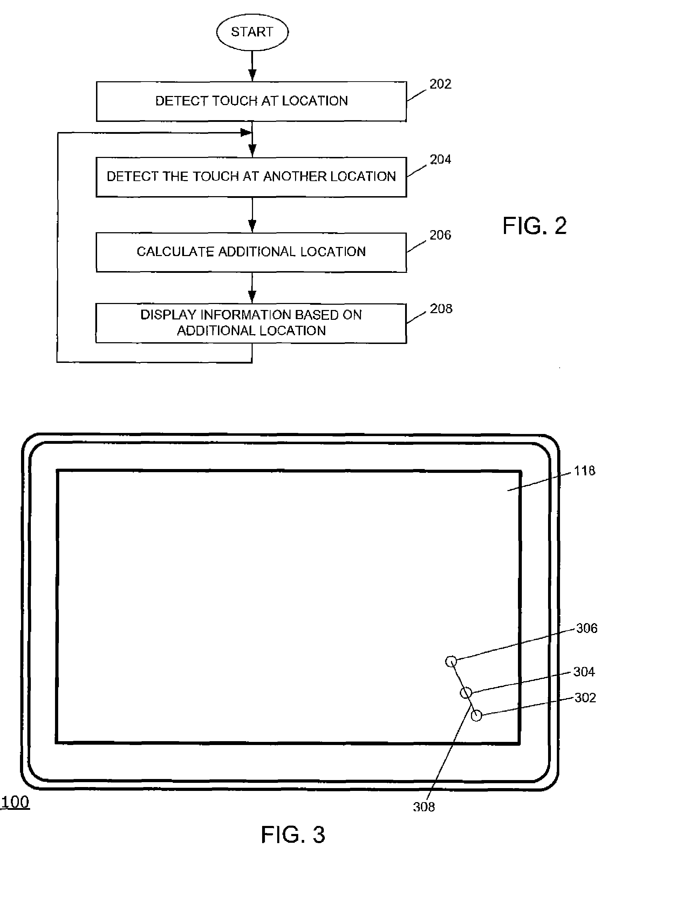

A flowchart illustrating an example of a method of controlling a touch-sensitive display is shown in FIG. 2. The method may be carried out by software executed, for example, by the processor 102. Coding of software for carrying out such a method is within the scope of a person of ordinary skill in the art given the present description. The method may contain additional or fewer processes than shown and/or described, and may be performed in a different order. Computer-readable code executable by at least one processor of the portable electronic device to perform the method may be stored in a computer-readable medium, such as a non-transitory computer-readable medium.

A touch is detected 202 at a location on the touch-sensitive display 118. The touch is detected based on touch data received, for example, at the controller 116 or the processor 102. Information that is displayed on the touch-sensitive display 118 may be updated based on the location of the touch detected at 202.

The touch is detected 204 at another touch location that may differ from the location detected at 202. The touch is detected at another location that differs from the previously detected location when the touch continues and moves from the location detected at 202 to another location that is detected at 204. The touch is detected at another location based on the touch data.

An additional location is calculated 206 based on the location of the touch detected at 202 and the location of the touch detected at 204. To calculate the additional location, the time that the touch-sensitive display 118 will next be updated is determined.

The processor 102 is coupled to the display controller 120 and the processor 102 may receive a signal, such as the Vertical Synchronization or Vsync signal, from the display controller 120. The Vsync signal is sent from the display controller 120 each time the display 112 is updated to update the displayed information. The touch-sensitive display 118 is updated at a regular update rate and the Vsync signal is received by the processor 102 at regular intervals in time. The regular interval is determined by the processor 102 and the processor 102 utilizes the regular interval to determine the time of the next update.

Alternatively, the display 112 may be updated at a known rate, rather than a rate that is determined by the processor 102 based on a Vsync signal. The display may also be updated at known times.

The additional location is calculated by extrapolating utilizing the time and location of the touch detected at 202 and the time and location of the touch detected at 204 to estimate the touch location at the time of the next update of the touch-sensitive display 118. The extrapolation may be a linear extrapolation. Alternatively, the extrapolation may be a non-linear extrapolation, for example, a curve extrapolation. The type of extrapolation may be predetermined or may be determined based on the detected touch locations.

When the touch-sensitive display is updated, information is displayed 208 on the touch-sensitive display 118 based on the calculated location. For example, when a touch is utilized to change the location of displayed information, such as an icon, the location of the displayed information is moved to the calculated location when the display is updated. Alternatively, when a touch is utilized to draw a line on the touch-sensitive display 118, the line may be extended to the calculated location when the touch-sensitive display 118 is updated.

When the touch is detected 204 at another, or alternative location, after updating the display, the displayed information may be updated again during the following display update, based on the detected touch location. The display is updated by replacing the calculated location with alternative location. The display may also be updated based on the calculation of an additional location determined utilizing the detected touch location and previously detected touch locations.

Optionally, more than two detected touch locations may be utilized to estimate the location of the touch. For example, multiple touch locations may be utilized in a non-linear extrapolation to estimate the location of a touch.

An example of a touch on a touch-sensitive display 118 of an electronic device 100 is shown in FIG. 3. The touch is detected at time t1 at a location L1 illustrated by the circle 302.

The touch moves and is detected at time t2 at the location L2 illustrated by the circle 304. Information that is displayed on the touch-sensitive display 118 is updated based on the location of the touch detected at 204. In the example illustrated in FIG. 3, the touch is utilized to draw a line on the touch-sensitive display 118 and the line 308 is displayed from a point associated with the location L1 to a point associated with the location L2.

The time of the next update of the touch-sensitive display 118, t3, is determined and an additional location, L3, is calculated by extrapolating to estimate the location of the touch at the time of the next update of the touch-sensitive display 118 In the example of FIG. 3, the extrapolation is a linear extrapolation and is calculated, for example, by the formula:

$$L3 = L2 + ((L2-L1)/(t2-t1))*(t3-t2).$$

The estimated location of the touch at time t3 is illustrated by the circle 306 and the line 308 is extended to a point associated with the location L3.

When the touch is detected at another location, the displayed information is updated based on the detected touch location to correct any error in the estimated location. The display is also updated based on the calculation of an additional location determined utilizing the detected location.

By estimating the location of the touch at the time of the next update of the touch-sensitive display 118, noticeable delay, also referred to as latency, between the time of a touch or touch movement and the time that information relating to the touch or touch movement is displayed, is reduced. For example, when drawing a line on the touch-sensitive display 118, latency causes a delay between the touch and displaying the line such that the displayed line appears to lag behind the touch. By estimating the location of the touch, the lag may be less noticeable to the user.

A method includes detecting a touch at a first location on a touch-sensitive display, detecting the touch at a second location on the touch-sensitive display, calculating a third location based on the first location and the second location, and displaying information utilizing the third location. An electronic device includes a touch-sensitive display and a processor coupled to the touch-sensitive display and configured to detect a touch at a first location on the touch-sensitive display, detect the touch at a second location on the touch-sensitive display, calculate a third location based on the first location and the second location, and display information utilizing the third location on the touch-sensitive display.

The present disclosure may be embodied in other specific forms without departing from its spirit or essential characteristics. The described embodiments are to be considered in all respects only as illustrative and not restrictive. The scope of the present disclosure is, therefore, indicated by the appended claims rather than by the foregoing description. All changes that come within the meaning and range of equivalency of the claims are to be embraced within their scope.

**Claims**

1.  A method comprising:

    detecting a touch at a first location on a touch-sensitive display;
    detecting the touch at a second location on the touch-sensitive display;
    calculating a third location based on the first location and the second location;
    displaying information utilizing the third location.

2.  The method according to claim 1, wherein calculating comprises extrapolating to determine the third location based on a time of a next update of the touch-sensitive display.

3.  The method according to claim 1, wherein displaying information comprises drawing an element on the touch-sensitive display.

4.  The method according to claim 1, wherein calculating the third location comprises extrapolating.

5.  The method according to claim 1, wherein calculating comprises extrapolating based on a time of the touch at the first location and a time of the touch at the second location.

6.  The method according to claim 1, wherein calculating comprises calculating based on an update rate of the touch-sensitive display.

7.  The method according to claim 1, wherein displaying information comprises displaying information associated with the third location.

8.  The method according to claim 1, comprising:

    detecting the touch at an alternative touch location;
    updating the displayed information based on the alternative touch location.

9.  The method according to claim 8, wherein updating comprises replacing the third location with the alternative location.

10.  The method according to claim 1, wherein calculating comprises determining a time of a display update based on a Vertical Synchronization signal from the touch-sensitive display.

11. A computer-readable medium having computer-readable code executable by at least one processor of a portable electronic device to perform the method according to claim 1.

12. An electronic device comprising:

a touch-sensitive display;
a processor coupled to the touch-sensitive display and configured to detect a touch at a first location on the touch-sensitive display, detect the touch at a second location on the touch-sensitive display, calculate a third location based on the first location and the second location, and display information utilizing the third location on the touch-sensitive display.

13. The electronic device according to claim 12, wherein the processor is configured to calculate by extrapolating to determine the third location based on a time of a next update of the touch-sensitive display.

14. The electronic device according to claim 12, wherein the processor is coupled to a display controller of the touch-sensitive display, and wherein the third location is calculated based on a Vertical Synchronization signal received from the display controller.

15. The electronic device according to claim 12, wherein the processor is configured to update the displayed information when an alternative touch location is detected.

FIG. 1

START

DETECT TOUCH AT LOCATION — 202

DETECT THE TOUCH AT ANOTHER LOCATION — 204

CALCULATE ADDITIONAL LOCATION — 206

DISPLAY INFORMATION BASED ON ADDITIONAL LOCATION — 208

FIG. 2

118

306

304

302

308

100

FIG. 3

Europäisches
Patentamt

European
Patent Office

Office européen
des brevets

## EUROPEAN SEARCH REPORT

Application Number

EP 12 15 2881

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/310118 A1 (ASMI YASSER [US] ET AL) 22 December 2011 (2011-12-22) * figures 1-9 * * paragraph [0020] - paragraph [0054] * ----- | 1-15 | INV. G06F3/048 G06F3/041 |

TECHNICAL FIELDS
SEARCHED      (IPC)

G06F

The present search report has been drawn up for all claims

| Place of search | Date of completion of the search | Examiner |
|---|---|---|
| Berlin | 13 July 2012 | Reise, Berit |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 2 620 857 A1

**ANNEX TO THE EUROPEAN SEARCH REPORT
ON EUROPEAN PATENT APPLICATION NO.**          EP 12 15 2881

This annex lists the patent family members relating to the patent documents cited in the above-mentioned European search report.
The members are as contained in the European Patent Office EDP file on
The European Patent Office is in no way liable for these particulars which are merely given for the purpose of information.

13-07-2012

| Patent document cited in search report | Publication date | Patent family member(s) | Publication date |
|---|---|---|---|
| US 2011310118 A1 | 22-12-2011 | CN 102253802 A<br>US 2011310118 A1 | 23-11-2011<br>22-12-2011 |

EPO FORM P0459